# EUROPEAN PATENT APPLICATION

(11) **EP 0 546 584 A1**
(43) Date of publication of application: **16.06.1993**
(21) Application number: 92121206.4
(22) Date of filing: 12.12.1992
(51) Int. Cl.: G07F 19/00, G06F 15/30

(54) **Data transfer method**

(30) Priority: 13.12.1991 JP 330275/91; 13.12.1991 JP 330276/91
(71) Applicant: MATSUSHITA ELECTRIC INDUSTRIAL CO., LTD., Kadoma-shi, Osaka-fu, 571 (JP)
(72) Inventor: Mutoh, Yoshihiro, Ibaragi-shi, Osaka-fu (JP); Takagi, Nobuya, Neyagawa-shi, Osaka-fu (JP); Oka, Takuya, Hirakata-shi, Osaka-fu (JP)
(74) Representative: Eisenführ, Speiser & Partner

(57) **Abstract**

A data transfer method which is so arranged that, through employment of a portable terminal unit (14), part or all of the data store in a first memory of a first IC card (1) is transferred to a second memory of the first IC card (1). By depressing a total sum push-button of a data transfer terminal device (i.e., settling terminal device) (9), with the first IC card (1) and a second IC card (3) inserted in the data transfer terminal device (9), all the data within the second memory of the first IC card (1) is transferred to a memory of the second IC card (3).

## Description

### BACKGROUND OF THE INVENTION

### 1. Field of the Invention

The present invention generally relates to a data transfer arrangement, and more particularly, to a data transfer method used for transactions or the like by electronically transferring data through employment of a plurality of portable data carriers at a wholesale dealer, etc. trading in cash in a field of distribution or circulation.

Conventionally, in the field of distribution in which a settling means by deferred payment such as credit sale, draft notes, credit cards, and the like is not employed as in a wholesale dealer, etc. transacting in cash, it has been a practice to use cash or checks as the settling means.

However, in the field of distribution as described above, since the settlement in a comparatively large sum of money (generally in the range from hundreds of thousands of yen to several million yen) is effected, there has been such a problem that cash tends to be bulky and takes much time for counting, while there is a danger to be involved in a crime if such a large sum of cash is to be carried about.

Meanwhile, although checks are free from such a problem as being bulky or troublesome for counting, they are inferior to cash in the creditability and quick encashment. In other words, from the viewpoint of security, there are such disadvantages in the checks as risk of nonpayment, difficulty in the quick encashment due to time required for confirmation of contents, and incapability of ensuring whether or not a bearer is a right person in the similar manner as in cash, which become one of the causes to induce a crime. By way of example, even when a criminal robs an authentic owner of his check, if the right owner of the check can not notify the robbery due to restriction, etc., it is difficult to prevent the check from being cashed in spite of the difficulty for quick encashment of the check.

### 2. Description of the Prior Art

### SUMMARY OF THE INVENTION

Accordingly, an essential object of the present invention is to provide a data transfer method and a data transfer terminal device which make it possible to effect electronic transfer of funds conveniently at high security without necessity for carrying about cash, so as to simplify the treatment at the side of stores by preliminarily setting a sum to be paid in a data carrier by a portable terminal unit.

In accomplishing this object, according to one preferred embodiment of the present invention, there is provided a data transfer method which includes the steps of transferring at least part of data memorized in a first non-volatile memory means of a first data carrier to a second non-volatile memory means of the first data carrier by a portable terminal unit for receiving said first data carrier which is portable and includes at least a coupling means with the terminal unit, rewritable first and second non-volatile memory means, and a calculating means, and thereafter, transferring all the data memorized in the second non-volatile memory means of said first data carrier to a non-volatile memory means of a second data carrier by a data transfer terminal device for receiving the second data carrier which is portable and includes at least a coupling means with the terminal unit, a rewritable non-volatile memory means, and a calculating means, and also said first data carrier.

In the method of the present invention as described above, by utilizing the portable terminal unit and data carriers without using cash and checks, etc., the processing is simplified in the data transfer terminal device at the side of the store, and thus, electronic fund transfer may be achieved at high security.

### BRIEF DESCRIPTION OF THE DRAWINGS

These and other objects and features of the present invention will become apparent from the following description taken in conjunction with the preferred embodiment thereof with reference to the accompanying drawings, in which;
Fig. 1 is a block diagram for explaining a data transfer method according to a first embodiment of the present invention,
Fig. 2 is a block diagram showing a general construction of an account settling system for the first embodiment of the present invention,
Fig. 3 is a perspective view of a settling terminal device for use in the account settling system according to the first embodiment of Fig. 2,
Fig. 4 is a block diagram showing a general construction of the settling terminal device for use in the account settling system of Fig. 2,
Fig. 5 is a block diagram for explaining a data transfer method according to a second embodiment of the present invention,
Fig. 6 is a perspective view of portable terminal unit for use in the account settling system according to the second embodiment of the present invention, and
Fig. 7 is a block diagram showing a general construction of the portable terminal unit for use in the account settling system according to the second embodiment of the present invention.

### DETAILED DESCRIPTION OF THE INVENTION

Before the description of the present invention proceeds, it is to be noted that like parts are designated by like reference numerals throughout the accompanying drawings.

### (First embodiment)

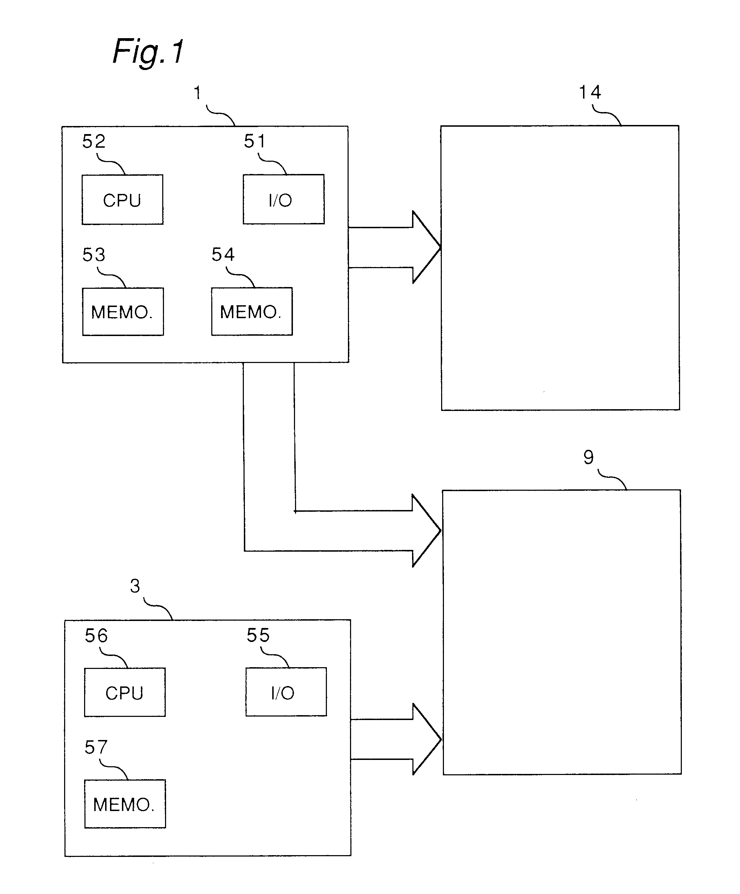

Referring now to the drawings, there is shown in Fig. 1, a block diagram explanatory of a data transfer method according to one preferred embodiment of the present invention, in which there are provided a first data carrier or first IC card 1 (referred to as a first IC card hereinafter) and a second data carrier or second IC card 3 (referred to a second IC card hereinafter) to be inserted into a portable terminal unit 14 and a settling terminal device 9 in a manner to be described below.

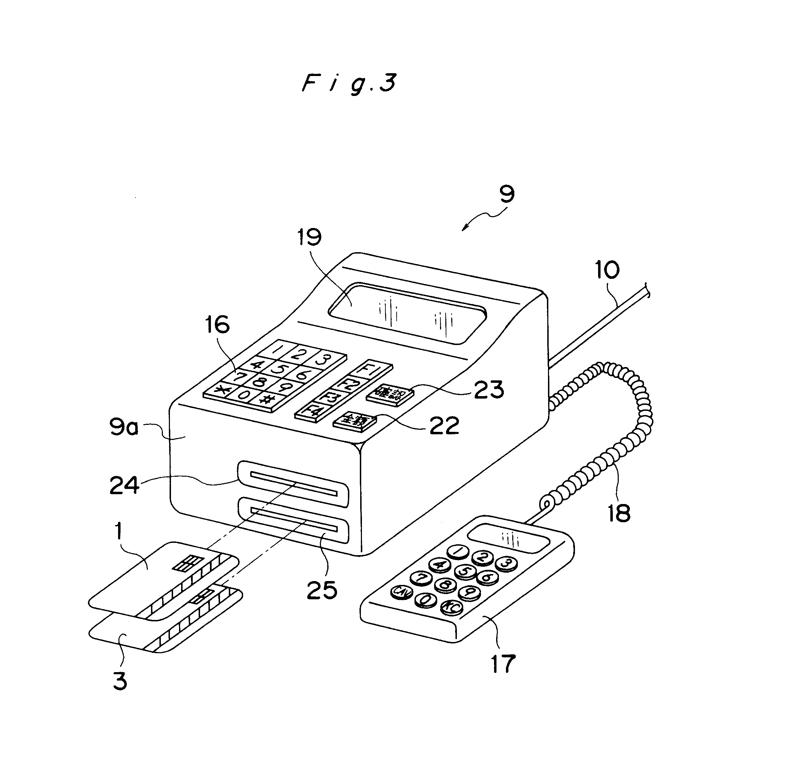

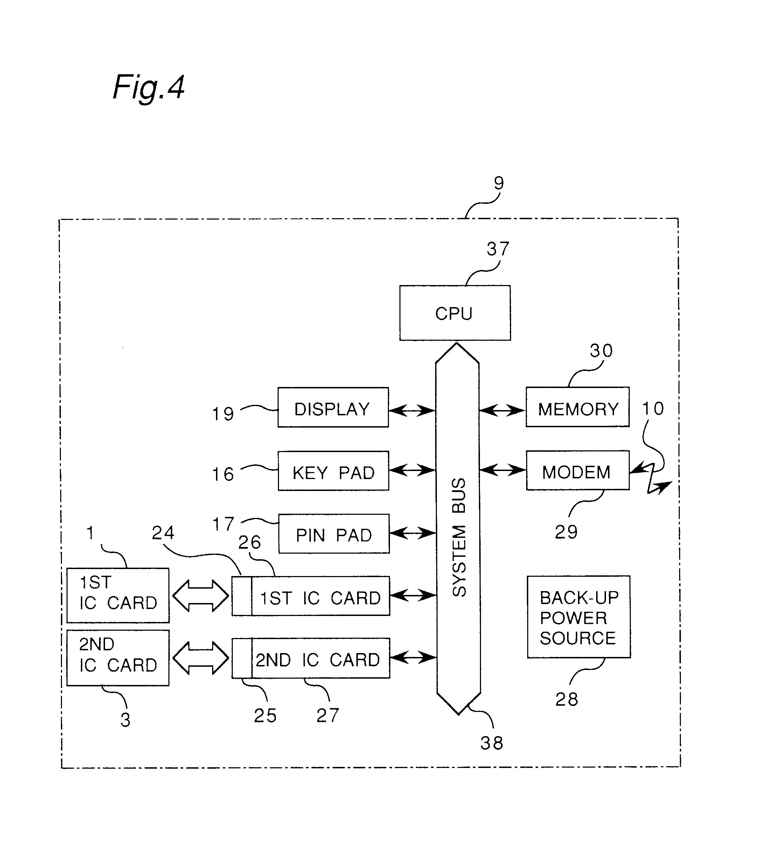

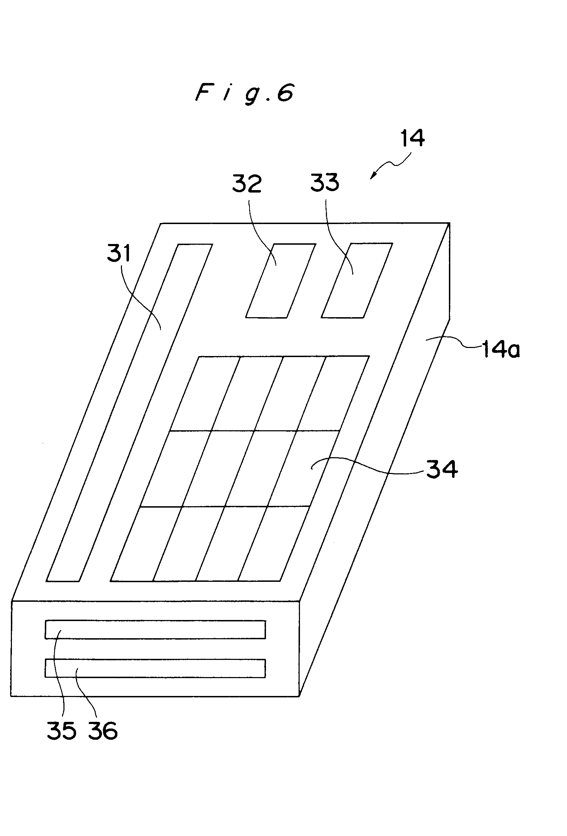

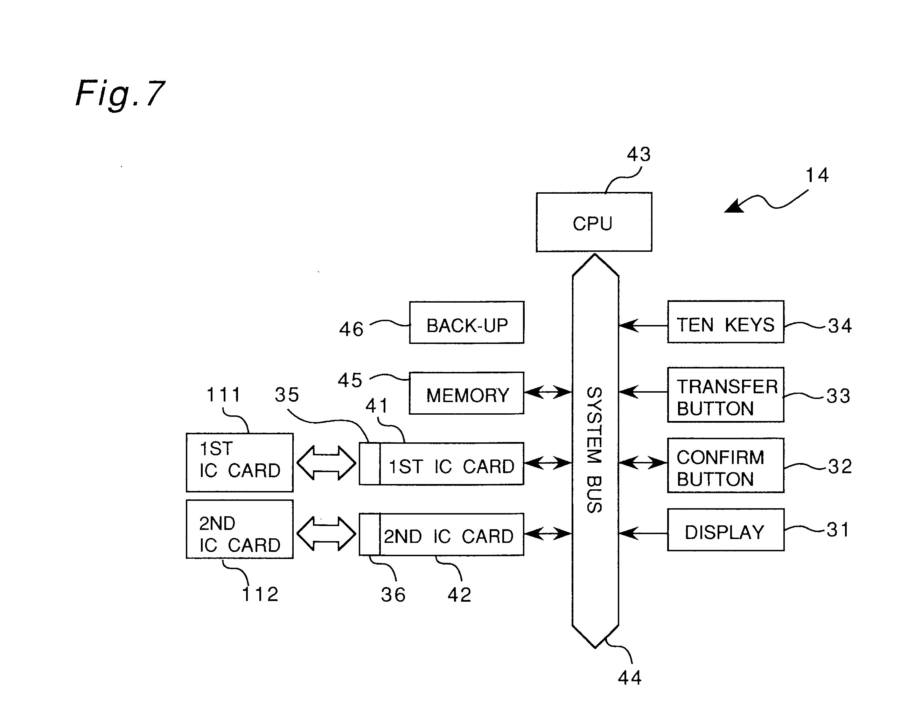

The IC card 1 includes at least a coupling means 51 with respect to external appliances, a calculating means 52, a first memory 53 and a second memory 54, and is arranged to communicate with the external appliances through said coupling means 51. Similarly, the IC card 3 includes at least a coupling means 55 with respect to external appliances, a calculating means 56, and a memory 57, and is arranged to communicate with the external appliances through said coupling means 55. It is to be noted here that the first memory 53 and the second memory 54 of the first IC card 1 may be physically the same one so far as they are logically separated. The construction of the settling terminal device 9 will be described later with reference to Figs. 3 and 4, while that of the portable terminal unit 14 will also be explained later by referring to Figs. 6 and 7.

In the data transfer method according to the present invention, it is so arranged that a bearer of the IC card 1 preliminarily transfers at least part of the data of the first memory 53 of said IC card 1, to the second memory 54 thereof by using the portable terminal unit 14, and a bearer of the IC card 3 (e.g., a store) transfers the data from the second memory 54 of the IC card 1 to the memory 57 of the IC card 3 by using the settling terminal device 9.

Subsequently, an account settling system employing the data transfer method according to the present invention will be explained.

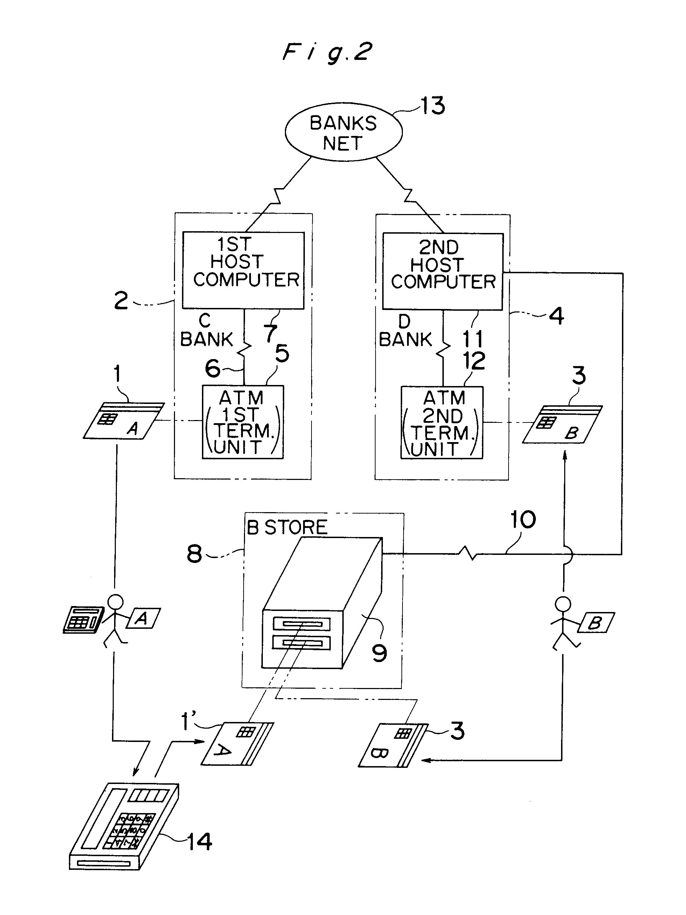

Fig. 2 shows a block diagram of the account settling system using the data transfer method according to one preferred embodiment of the present invention. In Fig. 2, Numeral 1 represents a first data carrier or IC card lent to a person or individual A (or a store and/or company) who has an account with a C bank 2, from said C bank 2, while Numeral 3 denotes a second data carrier or IC card lent to a person B (or a store and/or company) who has an account with a D bank 4, from said D bank 4, and Numeral 14 represents a portable terminal unit for the person A.

Still referring to Fig. 2, the arrangement of the account settling method using the IC cards will be described hereinbelow.

When the person A carries out a predetermined operation, with the first IC card 1 inserted into an ATM 5 (Automated Teller Machine, referred to as ATM hereinafter) of the C bank 2, a certain sum of money e.g., two million yen is deduced from the account of the person A, and is retained in balance in the memory of the IC card 1. Simultaneously, the data is also transmitted to a host computer 7 connected with the ATM 5 through a communication line 6, and two million yen is held out of the balance in the account of the person A.

The person A brings the first IC card 1 to a B store 8 so as to use said first IC card 1 for the account settlement at the B store 8. This B store 8 is, for example, a pay-in-cash wholesaler or the like. The person A is to settle for e.g., 1,500,000 yen at the B store 8. It should be noted here that it is also possible to settle the account by taking the portable terminal unit 14 to the B store 8 in the above case.

Firstly, the person A insets the IC card 1 into the portable terminal unit 14 for the person A so as to notify the IC card 1 to use 1,500,000 yen from the portable terminal unit 14. More specifically, the IC card 1 has first and second memories 53 and 54 (Fig. 1), and based on the instruction from the portable terminal unit 14, the amount to be used this time (i.e., 1,500,000 yen here) is transferred to the second memory 54 from the first memory 53 in which the data for the 2,000,000 yen is retained as the balance. (Hereinafter, the IC card in which meney data has been entered in the second memory 54 will be represented as 1').

Then, the person A inserts the first IC card 1' into a first insertion slot of the settling terminal device 9 installed at the B store 8, and the B store 8 inserts the second IC card 3 into a second insertion slot thereof. By depressing a confirmation push-button 23 (Fig. 3) of the settling terminal device 9, the B store 8 can ensure the amount retained in the second memory of the first IC card 1', and by depressing a total sum push-button 22 (Fig. 3) of the settling terminal device 9, all of the sum of money 1,500,000 yen retained in the second memory 54 of the first IC card 1' is transferred into the memory 57 of the second IC card 3 and thus, the second IC card 3 is to have received 1,500,000 yen from the first IC card 1'. The result is transmitted to the host computer 11 of the D bank 4 through a communication line 10.

The B store 8 brings the second IC card 3 to the D bank 4, and by carrying out a predetermined operation, with the second IC card 3 inserted in the ATM 12 thereat, 1,500,000 yen is received into the account of a person B of the D bank 4 from the second IC card 3 in this example. At this stage, the validity of the money received by the second IC card 3 is confirmed through comparison with the result which has already been transmitted to the host computer 11 from the settling terminal device 9 in advance. Furthermore, between the banks, the account settlement is effected by communication through, for example, a BANKS net 13.

By the procedures as described so far, the fund transfer can be effected from the account of the person A to that of the B store 8 by using the two IC cards 1 and 3, and the settling terminal device 9, without handling troublesome and perilous cash or checks.

It should be noted here that the communication of the results of transactions from the settling terminal device 9 to the host computer 11 through the communication line 10 (which may be of a telephone circuit line generally used) need not necessarily be of the on-line and real time transfer, but may be of a batch transfer of off-line. In other words, at night time, and on saturdays or holidays out of business hours of the D bank 4, it may be so arranged to once accumulate the results of dealings in the settling terminal device 9 for transfer thereof after resumption of the business at the D bank 4. Normally , since the host computer 11 has resumed its operation earlier than the transfer into the account of the B store 8 from the second IC card 3, through employment of the ATM 12, the result of transactions at the settling terminal device 9 has already been transmitted to the host computer 11. Accordingly, checking of the result of transactions may be immediately effected at the time point of receipt settlement by the ATM 12. However, in the case where the results of transactions has not been transmitted to the host computer 11 by such reasons as cutting off of the power supply for the settling terminal device 9 on holidays of the B store 8, it may be so arranged to deal with the matter as "temporary receipt" at the time point of receipt settlement at the ATM 12 so as to effect the formal receipt when the result of transactions is transmitted from the settling terminal device 9 afterwards, and therefore, the settling terminal device 9 may be located in a place distant from the bank. This is the same state as that in a conventional transaction by a check, in which payment in cash can not be effected until the contents of the check are confirmed for fund settlement between banks even when the check has been handed over at a window of a bank and written in a bankbook.

Similarly, the arrangement may be so made to add electronic signs to the sum of money to be transferred between the C bank 2 and the first IC card 1, between the first IC card 1 and the second IC card 3 and between the second IC card 3 and the D bank 4, respectively in order to guarantee the validity of the sum of money to be transferred. Such arrangement as above may be readily realized through employment of calculating functions of the IC cards. In this case, since the host computer 11 can ensure the validity of the received sum by only checking the sign affixed to the sum sent from the second IC card 3, it is not necessary to receive the result of transactions from the B store 8 by the on-line (or off-line) through the communication line 10.

Moreover, as one of the features available by using such IC cards, there may be raised a characteristic for electronic circulation of money data, in which the B store 8 can use the second IC card 3 for another payment.

Fig. 3 shows a general appearance of the settling terminal device 9 employed in the account settling system of the present invention.

In Fig. 3, the settling terminal device 9 generally includes a main body 9a of a rectangular cubic box-like configuration, a display window 19, a key pad or ten-keys 16, a total sum push-button 22 and a confirmation push-button 23 and other pushbuttons provided on the upper surface of the main body 9a, first and second insertion slots 24 and 25 formed at a front side of said main body 9a, and a PIN pad 17 connected to the main body 9 through a PIN pad cord 18.

By inserting the first IC card 1 into the first insertion slot 24, and the second IC card 3 into the second insertion slot 25, the bearer of the first IC card 1 can input the recitation number through the PIN pad 17. Meanwhile, when the bearer of the second IC card 3 (the B store in this embodiment) depresses the confirmation push-button 23 of the settling terminal device 9, the sum of money retained in a second memory 54 of the first IC card 1 can be checked by the display window 19, and upon further depression of the total sum push-button 22, all of the sum retained in the second memory 54 of the first IC card 1 is adapted to be transferred to the memory 57 of the second IC card 3. The processing and result of the above treatment may be confirmed by the display window 19. Moreover, the result of the transactions is transferred to the host computer (represented by Numeral 11 in Fig. 2) of the bank through the telephone cord 10 after having been accumulated in a memory 30 (Fig. 3) of the settling terminal device 9.

Here, the second IC card 3 need not be inserted each time the account settlement is effected, and may be modified to be incorporated in the settling terminal device 9. In this case, the second IC card insertion slot 25 of the terminal device 9 can be dispensed with, while the second IC card 3 may be replaced by another item having a shape other than a card so far as it has a similar function. However, such an item should be physically safe so that the data stored inside may not be unduly altered. Furthermore, when the B store 8 is to pay, the settling terminal device 9 is taken to the bank, and therefore, it is desirable to be of a size capable of carrying about.

Fig. 4 shows a block diagram of the settling terminal device 9 to be employed in the account settling system according to the present invention.

The first IC card 1 is inserted into a first IC card reader/writer (referred to as R/W hereinafter) 26 through the first insertion slot 24. The second IC card 3 is inserted into a second IC card R/W 27 through the second insertion slot 25. The bearer of the first IC card 1 carries out the operation by a predetermined procedure through the key pad 16, while checking the contents of the display window 19, and upon input of the recitation number of the first IC card 1 by the PIN pad 17, a CPU (central processing unit) 37 effects the fund transfer, through a system bus 38, from the first IC card 1 in the first IC card R/W 26 to the second IC card 3 in the second IC card R/W 27, with the result of transactions being accumulated in the memory 30. Further, the result of transactions thus accumulated in the memory 30 is sent to the bank through a modem 29 and the communication line 10. The terminal device 9 is also provided with a back-up power source 28 for supply of power to the CPU 37 and the respective input and output devices so as to complete the normal processing even when the power should fail during the processing. The memory 30 coupled to the CPU 37 through the system bus 38 may be divided into a memory portion for storing the program, a memory portion for storing temporary information in the course of processing, and a memory portion for storing the result of transactions, etc., of which in the memory portion for storing the result of transactions, EEPROM (Electrically Erasable Programmable Read Only Memory) which is a non-volatile memory retaining its contents even after the power its cut off, is employed for extra safety. Moreover, since the CPU 37 is incorporated with a logic for coding, and the data for the memory to be stored with the result of transactions is of the coded data, alteration of the data by ill-intention or the like can not be effected, and thus, consideration is given to the safety of the data and security within the settling terminal device 9. Furthermore, for still more improved security, it is so arranged, for example, that coding logic is incorporated similarly in the IC card 1 or 3.

It is to be noted here that, in the foregoing embodiment, although the ATM 5 or 12 is employed as the input device into the IC card at the bank, the device is not limited to the above, but may be of any other device so far as it has the similar functions. Meanwhile, in the above embodiment, the explanation is given with reference to the case where the two banks are connected by the BANKS net 13, but they may be modified to be directly connected by an exclusive circuit line or connected through other networks such as MICS net, etc. Moreover, one or both banks 2 and 4 may be of post offices or other banking facilities, while the connection may be made not between two banks, post offices etc., but between the same bank or same post office. Further, the terminal device 9 need not be located in the B store 8, but may be installed in one or both of the banks or post offices.

In the foregoing embodiment, although the person A is adapted to effect settlement by using one IC card 1, explanation will be given hereinbelow with reference to the case where two or more IC cards are employed.

### (Second embodiment)

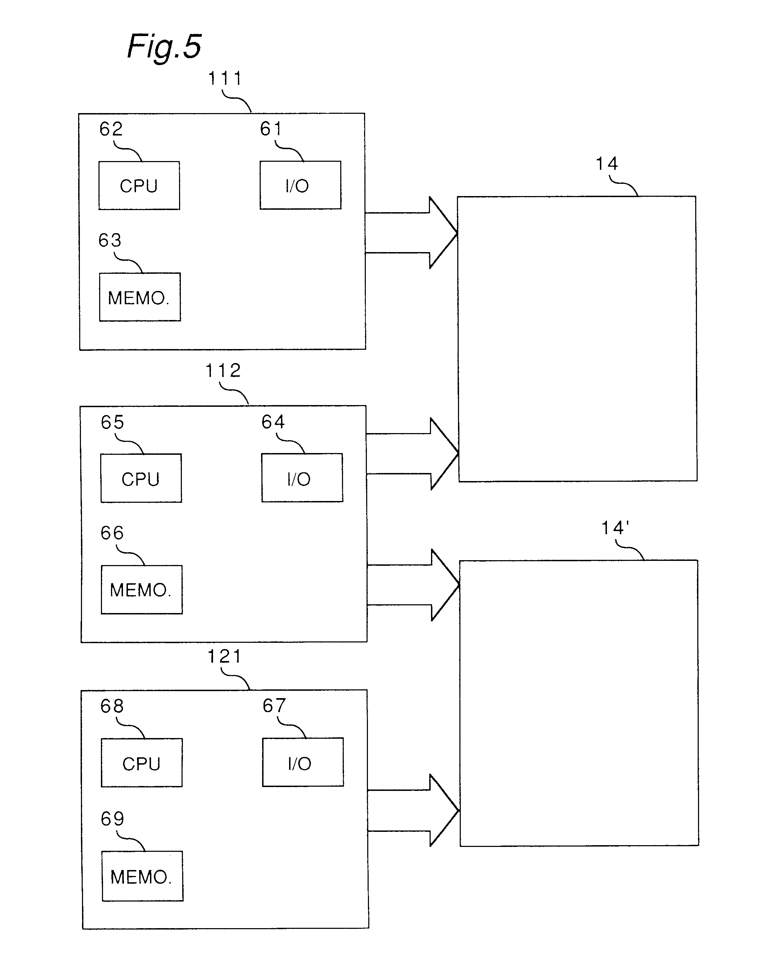

Fig. 5 shows a block diagram for explaining a data transfer method according to a second embodiment of the present invention, in which there are provided a first IC card 111, a second IC card 112, and a third IC card 121 which are to be coupled with a first portable terminal unit 14 and a second portable terminal unit 14' in a manner as described hereinbelow.

The IC card 111 includes at least a coupling means 61 with respect to external appliances, a calculating means 62 and a memory 63, and communicates with the external appliances through the coupling means 61. The IC card 112 includes at least a coupling means 64 with respect to external appliances, a calculating means 65 and a memory 66, and communicates with the external appliances through the coupling means 64. The IC card 121 includes at least a coupling means 67 with respect to external appliances, a calculating means 68 and a memory 69, and communicates with the external appliances through the coupling means 67.

In the data transfer method according to this embodiment, it is so arranged that a bearer of the IC card 111 preliminarily transfers at least part of the data of the memory 63 of said IC card 111, to the memory 66 of the IC card 112 by using the portable terminal unit 14, and a bearer of the IC card 121 (e.g., store) transfers the data from the memory 66 of the IC card 112 to the memory 69 of the IC card 121 through employment of the portable terminal unit 14'. According to the above embodiment, the store does not use the settling terminal device 9 as described earlier with reference to the first embodiment of Fig. 1, either, but employs the portable terminal unit 14' similar to that for the person A. It is to be noted here that in each of the portable terminal units of the above embodiment, only the number of the card inserting slots is increased to two from one in the portable terminal unit in the first embodiment of Fig. 2, and the fundamental construction is the same in both of the terminal units.

Subsequently, the portable terminal unit 14 according to one embodiment of the present invention which is lent by the banks, etc. will be described.

Fig. 6 is a perspective view of the portable terminal unit 14 owned by a payer or receiver of the electronic funds in the data transfer method according to the present invention.

In Fig. 6, the portable terminal unit 14 generally includes a main body 14a of a rectangular cubic box-like shape, a display window 31, a key pad or ten-keys 34, a confirmation push-button 32 and a transfer push-button 33 provided on the upper surface of the main body 14a, first and second insertion slots 35 and 36 formed at a front side of said main body 14a as illustrated.

By inserting the first IC card 111 into the first insertion slot 35, and the second IC card 112 into the second insertion slot 36, the bearer of the first IC card 111 can input the recitation number through the ten-keys 34. Moreover, the data as inputted through the ten-keys 34 may be checked by the display window 31. By depressing the confirmation push-button 32, it is possible to compare the data stored in the memory 63 of the IC card 111 inserted into the first insertion slot 35, with the data inputted through the ten-keys 34, and when the transfer push-button 33 is depressed, the money data equivalent to the sum inputted from the ten-keys 34 is transferred from the memory 63 of the IC card 111 to the memory 66 of the IC card 112. It is also possible to display the data stored in the memory 66 of the IC card 112 inserted in the second insertion slot 36.

Meanwhile, when the transfer push-button 33 is depressed by the bearer of the IC card 121 after the confirmation push-button 32 has been depressed for display of the data stored in the memory 66 of the IC card 112 by using the portable terminal unit 14', all the money data displayed on the display-window 31 is transferred from the memory 66 of the IC card 112 to the memory 69 of the IC card 121.

It should be noted here that, in the foregoing embodiment, although the portable terminal unit 14 has been described as having two insertion slots of the IC cards, such insertion slots may be reduced to one, in which case, the data transfer with respect to the other IC cards may be effected through a memory 45 (Fig. 7) within the portable terminal unit 14. Moreover, by reducing the insertion slots to one, the portable terminal unit may be further decreased in its size.

Moreover, the first IC card 111 need not be inserted into the first insertion slot 35 of the portable terminal unit 14 each time the transfer of the electronic funds is effected, and may be modified to be incorporated in the portable terminal unit 14. In this case, the first IC card insertion slot 35 of the portable terminal unit 14 can be dispensed with, while the first IC card 111 may be replaced by another item having a shape other than a card so far as it has a similar function. However, such an item should be physically safe so that the data stored inside may not be unduly altered.

Fig. 7 is a block diagram showing construction of portable terminal unit 14 to be employed in the data transfer method according to the present invention.

The first IC card 111 is inserted into a first IC card reader/writer (referred to as R/W hereinafter) 41 through the first insertion slot 35. The second IC card 112 is inserted into a second IC card R/W 42 through the second insertion slot 36. The bearer of the first IC card 111 carries out the operation by a predetermined procedure through the ten-keys 34, while checking the contents of the display window 31, and upon input of the recitation number of the first IC card 111, a CPU (central processing unit) 43 effects the fund transfer through a system bus 44, from the first IC card 111 in the first IC card R/W 41 to the second IC card 112 in the second IC card R/W 42. The result of transfer may be accumulated in the memory 45. The portable terminal unit 14 is also provided with a back-up power source 46 for supply of power to the CPU 43 and the respective input and output devices so as to complete the normal processing even when the power should fail during the processing. The memory 45 coupled to the CPU 43 through the system bus 44 may be divided into a memory portion for storing the program, a memory portion for storing temporary information in the course of processing, and a memory portion for storing the result of transactions, etc., of which in the memory portion for storing the result of transactions, EEPROM (Electrically Erasable Programmable Read Only Memory) which is a non-volatile memory retaining its contents even after the power is cut off, is employed for extra safety. Moreover, since the CPU 43 is incorporated with a logic for coding, and the data for the memory to be stored with the result of transactions is of the coded data, alternation of the data by ill-intention or the like can not be effected, and thus, consideration is given to the safety of the data and security also within the portable terminal unit 14.

According to the data transfer method of the present invention, it may be so arranged that in order to guarantee the validity of the sum of money to be transferred, certification is first effected mutually between the IC card and the portable terminal unit, and thereafter, electronic sings are affixed to the money data transferred between the respective IC cards. Such arrangement may be readily realized through employment of the calculating function of the IC card. In this case, since the validity of the data can be confirmed by merely checking the sign affixed to the money data as transferred, it is not particularly necessary to ensure by on-line through the communication line.

Furthermore, as the feature available by employing the IC cards, in the similar method as in the embodiment of the present invention, the B store can transfer the electronic funds from the third IC card 121 for another payment by using a fourth IC card (not shown) of the B store, thereby to achieve still more efficient circulation of electronic money data.

As is clear from the foregoing description, according to the present invention, since the account settling system employing the IC card which is the medium convenient to handle at high security, may be realized, various problems inherent in the conventional arrangements using cash and checks for settlement, such as bulkiness, troublesome procedure for counting, difficulty in quick encashment, low security , and risk of crime, etc. can be advantageously solved.

Furthermore, by preliminarily setting the sum to be paid by the individual in the IC card at the portable terminal unit, the transactions in the data transfer terminal device may be simplified at the side of the store for electronic fund transfer at high security.

Although the present invention has been fully described by way of example with reference to the accompanying drawings, it is to be noted here that various changes and modifications will be apparent to those skilled in the art. Therefore, unless otherwise such changes and modifications depart from the scope of the present invention, they should be construed as included therein.

## Claims

1. A data transfer method which comprises the steps of transferring at least part of data memorized in a first non-volatile memory means of a first data carrier (1) to a second non-volatile memory means of the first data carrier (1) by a portable terminal unit (14) for receiving said first data carrier (1) which is portable and includes at least a coupling means with the terminal unit, rewritable first and second non-volatile memory means, and a calculating means, and thereafter, transferring all the data memorized in the second non-volatile memory means of said first data carrier (1) to a non-volatile memory means of a second data carrier (3) by a data transfer terminal device (9) for receiving the second data carrier (3) which is portable and includes at least a coupling means with the terminal unit, a rewritable non-volatile memory means, and a calculating means, and also, said first data carrier (1

2. A data transfer method as claimed in Claim 1, wherein said portable terminal unit (14) includes at least coupling means with the data carriers, and an external input means, thereby to transfer predetermined data from the first non-volatile memory means of the data carrier to the second non-volatile memory means thereof according to a recitation number and instruction inputted from the external input means by a bearer of said data carrier.

3. A data transfer method which comprises the steps of transferring at least part of data memorized in a first non-volatile memory means of a data carrier to a second non-volatile memory means of the data carrier by a portable terminal unit (14) for receiving said data carrier which is portable and includes at least a coupling means with the terminal unit, rewritable first and second non-volatile memory means, and a calculating means, and thereafter, transferring all the data memorized in the second non-volatile memory means of said data carrier to a non-volatile memory means of a data transfer terminal device (9) by the data transfer terminal device (9) for receiving said data carrier.

4. A data transfer method which comprises the steps of transferring at least part of data memorized in a non-volatile memory means of a first data carrier (111) to a non-volatile memory means of a second data carrier (112) by a first portable terminal unit (14) for receiving said first and second data carriers (111, 112) each being portable and including at least a coupling means with the terminal unit, rewritable non-volatile memory means, and a calculating means, and thereafter, transferring all the data memorized in the non-volatile memory means of said second data carrier (112) to a non-volatile memory means of a third data carrier (121) by a second portable terminal unit (14') for receiving a third data carrier (121) which is portable, and includes at least a coupling means with the terminal unit, a rewritable non-volatile memory means, and calculating means, and also, said second data carrier (112).

5. A data transfer method as claimed in Claim 4, wherein said portable terminal unit includes at least coupling means for both of first data carrier (111) and second data carrier (112), and external input means, thereby to transfer predetermined data from non-volatile memory means of the first data carrier (111) to non-volatile memory means of the second data carrier (112) according to a recitation number and instruction inputted from the external input means by a bearer of said first data carrier (111).

6. A data transfer method as claimed in Claim 4, wherein said portable terminal unit is so arranged that said first data carrier (111) and said second data carrier (112) can be coupled to each other and said first data carrier is normally semi-fixedly retained.

7. A data transfer method which comprises the steps of transferring at least part of data memorized in a non-volatile memory means of a portable terminal unit to a non-volatile memory means of a data carrier by the first portable terminal unit (14) for receiving said data carrier which is portable and includes at least a coupling means with the terminal unit, rewritable non-volatile memory means, and a calculating means, and thereafter, transferring all the data memorized in the non-volatile memory means of said data carrier to a non-volatile memory means of a second portable terminal unit (14') by said second portable terminal unit for receiving said data carrier.
